# EUROPEAN PATENT APPLICATION

(11) **EP 4 840 973 A1**
(43) Date of publication of application: **18.11.2026**
(21) Application number: 24916812.1
(22) Date of filing: 31.12.2024
(51) Int. Cl.: C21D 1/18

(54) **HEAT TREATMENT METHOD FOR ULTRAHIGH-STRENGTH AND HIGH-TOUGHNESS STEEL**

(30) Priority: 10.01.2024 CN 202410037604
(71) Applicant: Daye Special Steel Co., Ltd., Huangshi, Hubei 435001 (CN)
(72) Inventor: RUAN, Dong, Huangshi, Hubei 435001 (CN); LIU, Guanghui, Huangshi, Hubei 435001 (CN); XU, Guangpeng, Huangshi, Hubei 435001 (CN); ZHOU, Lixin, Huangshi, Hubei 435001 (CN); WANG, Wenge, Huangshi, Hubei 435001 (CN); ZHANG, Yongqiang, Huangshi, Hubei 435001 (CN); YANG, Peng, Huangshi, Hubei 435001 (CN); DONG, Xiaoliang, Huangshi, Hubei 435001 (CN); CAO, Zheng, Huangshi, Hubei 435001 (CN); CAO, Guang, Huangshi, Hubei 435001 (CN)
(74) Representative: Eisenführ Speiser
(86) International application number: PCT/CN2024/144589
(87) International publication number: WO 2025/148765

(57) **Abstract**

The present disclosure provides a heat treatment method for an ultrahigh-strength and high-toughness steel, which relates to the technical field of heat treatment methods for special metal materials. The method includes quenching treatment, deep cryogenic treatment and tempering treatment. Through the precise control of process parameters for heat treatment such as treatment temperature, treatment time, furnace temperature uniformity and single-shelf charging capacity and so forth at each step, the formation of beneficial strength-toughness microstructures is synergistically promoted. This enables the preparation of ultrahigh-strength and high-toughness steel with an excellent strength-toughness balance, stably achieving the technical indicators of room-temperature tensile strength ≥ 1930 MPa, room-temperature yield strength ≥ 1620 MPa, and fracture toughness ≥ 110 MPa·m^{1/2}. Moreover, the coefficient of variation of the mechanical properties of the prepared ultrahigh-strength and high-toughness steel meet the ultra-high standards which coefficient of variation for tensile strength ≤ 0.18 and coefficient of variation for fracture toughness ≤ 2.0. As a result, the product has qualified mechanical properties with small fluctuations and high stability, which can satisfy the production requirements.

## Description

### Field of the Invention

The present disclosure relates to the technical field of heat treatment methods for special metal materials, and more specifically, to a heat treatment method for an ultrahigh-strength and high-toughness steel.

### Background of the Invention

With the rapid advancement of modern science and technology, the demands on metal materials have become increasingly stringent, especially in certain specialized environments such as the fields of aviation and aerospace, which often require ultrahigh-strength, high-toughness special metal materials. ultrahigh-strength steel not only possesses extremely high strength but also offers excellent plasticity and toughness, outstanding fatigue resistance, fracture toughness, and stress corrosion resistance, thereby meeting the operational requirements of such applications.

3.1Cr-11.5Ni-13.5Co-1.2Mo (0.21-0.25C) steel is a new type of ultrahigh-strength steel. Currently, the commonly adopted international and domestic execution standards for such high-strength and high-toughness 3.1Cr-11.5Ni-13.5Co-1.2Mo (0.21-0.25C) steel (with chemical composition shown in Table 1) specify the following requirements: a room-temperature tensile strength ≥ 1930MPa, a room-temperature yield strength ≥ 1620MPa, and a fracture toughness ≥ 110MPa·m^{1/2}. With C, Cr, and Mo as the main strengthening elements, this alloy possesses ultrahigh-strength and high-toughness, along with excellent stress-corrosion cracking resistance and fatigue fracture resistance, making it an ideal material for aerospace landing gear and now widely used in aircraft landing gear and other aerospace fields.

**Table 1 the Chemical Compositions**

| **Elements** | **C** | **Mn** | **Si** | **S** | **P** | **Ni** | **Cr** | **Mo** | **Co** | **Al** | **N** | **O** | **Ti** |
|---|---|---|---|---|---|---|---|---|---|---|---|---|---|
| wt% | 0.21-0.25 | ≤0.10 | ≤0.10 | ≤0.005 | ≤0.008 | 11.00-12.00 | 2.90-3.30 | 1.10-1.30 | 13.00-14.00 | ≤0.015 | ≤0.0015 | ≤0.0020 | ≤0.015 |

3.1Cr-11.5Ni-13.5Co-1.2Mo (0.21-0.25C) steel is a secondary-hardening type of ultra-high-strength steel. Generally, after quenching treatment, deep cryogenic treatment and tempering treatment, it develops a lath martensitic matrix with a high dislocation density, along with dispersed and fine carbides that are coherent or semi-coherent with the matrix, thereby producing a strengthening effect. Meanwhile, the martensitic substructure and film-like reversed austenite exert a toughening effect. However, due to the narrow processing window of this steel, the three-step heat treatment process (quenching treatment, deep cryogenic treatment, and tempering treatment) is closely interconnected and interdependent. Fluctuations in the heat treatment process can easily lead to instability during mechanical property testing, resulting in mechanical properties failing to meet specifications, which have caused significant difficulties for producers. Therefore, there is an urgent need to achieve stable matching of the strength and toughness (mechanical properties) of this ultrahigh-strength and high-toughness steel through stable regulation of the heat treatment process and its parameters.

### SUMMARY

The objective of the present disclosure is to provide a heat treatment method for an ultrahigh-strength and high-toughness steel. By regulating the processes and parameters of the heat treatment method consisting of the quenching treatment, the controlled deep cryogenic treatment, and the tempering treatment, the strength and toughness of the ultrahigh-strength and high-toughness steel is stably improved.

In order to achieve the above-mentioned purpose, the present disclosure provides the following technical solutions:
The present disclosure provides a heat treatment method for an ultrahigh-strength and high-toughness steel comprising the following steps:

### Step (1) Quenching treatment:

Raising a temperature of a heating furnace with a temperature uniformity of ≤ ±14°C to 885°C; after the temperature displayed on the temperature controller is stably maintained at 885°C, placing the mechanical property test specimens into the effective zone of the heating furnace with a tray for heating; starting timing when the temperature of the heating furnace rises to 885 °C within 5-10 minutes, and holding the temperature for 60-70 minutes; controlling the temperature of cooling oils in the oil tank to ≤60 °C before the quenching treatment; turning on the stirring function of the oil tank; taking the mechanical property test specimens out of the heating furnace quickly, then dispersing them and immersing them into the oil tank for oil cooling;

### Step (2) Deep cryogenic treatment:

Lowering the temperature of a deep cryogenic cabinet with a temperature uniformity of ≤ ±8°C to -73°C; after the temperature displayed on a temperature controller of the deep cryogenic cabinet is stably maintained at -73°C, placing the mechanical property test specimens which have been quenched into a central effective zone of the deep cryogenic cabinet with a tray for the deep cryogenic treatment; closing a door of the deep cryogenic cabinet, then starting timing once the temperature displayed on the temperature controller returns to -73°C again; holding the temperature for 60-70 minutes; cutting off a power supply, taking the mechanical property test specimens out of the deep cryogenic cabinet, and allowing their temperature to return to room temperature in air;

### Step (3) Tempering treatment:

Raising the temperature of a tempering furnace with the temperature uniformity of ≤ ±3°C to 482 °C; after the temperature displayed on a temperature controller of the tempering furnace is stably maintained at 482 °C, placing the mechanical property test specimens that have been subjected to the deep cryogenic treatment into an effective zone of the tempering furnace for heating, then starting timing once the temperature displayed on the temperature controller returns to 482°C again; holding the temperature for 370~390 minutes; taking the test specimens out of the tempering furnace and cooling them in air for 2 hours to room temperature, thereby obtaining the ultrahigh-strength and high-toughness steel.

Further, on the basis of the above technical solutions of the present disclosure, in the step (1), the heating furnace for the quenching treatment is a box-type furnace, and its single-shelf charging capacity is ≤ 4 tensile test specimens plus 4 impact test specimens and plus 4 fracture toughness test specimens.

Further, on the basis of the above technical solutions of the present disclosure, in the step (2), the single-shelf charging capacity of the deep cryogenic cabinet is ≤ 12 tensile test specimens plus 12 impact test specimens and plus 12 fracture toughness test specimens.

Further, on the basis of the above technical solutions of the present disclosure, in the step (3), the tempering furnace is a pit-type furnace, and its single-shelf charging capacity is ≤ 8 tensile test specimens plus 8 impact test specimens and plus 8 fracture toughness test specimens.

Further, on the basis of the above technical solutions of the present disclosure, in step (1), the time for a rapid removal of the mechanical property test specimens from the heating furnace and then transferring them to the cooling oil for quenching is ≤ 6s.
and/or, the cooling time of the mechanical property test specimens in the cooling oil is 20-60 minutes, with sufficient and uninterrupted stirring performed to promote the uniformity of the material during the quenching treatment.

Further, on the basis of the above technical solutions of the present disclosure, the cooling oil is B244 vacuum quenching oil;
and/or, the oil cooling rate of the cooling oil is 60-90 °C/s.

Further, on the basis of the above technical solutions of the present disclosure, a time interval between the quenching treatment and the deep cryogenic treatment does not exceed 1-2 hours;
and/or a time interval between the deep cryogenic treatment and the tempering treatment is 2-8 hours.

The present disclosure further provides an ultrahigh-strength and high-toughness steel produced by above heat treatment method.

Further, on the basis of the above technical solutions of the present disclosure, the ultrahigh-strength and high-toughness steel is 3.1Cr-11.5Ni-13.5Co-1.2Mo steel, wherein a mass percentage of C is 0.21~0.25%.

Further, on the basis of the above technical solutions of the present disclosure, coefficients of variation of mechanical properties of the ultrahigh-strength and high-toughness steel include:
a coefficient of a variation of a tensile strength ≤ 0.18; a coefficient of a variation of a fracture toughness ≤ 2.0.

The present disclosure provides a heat treatment method for an ultrahigh-strength and high-toughness steel comprising the following beneficial effects:
Through the precise control of quenching treatment, deep cryogenic treatment and tempering treatment during the heat treatment of the mechanical property test specimens of this material-including the precise control of treatment temperature, treatment time, furnace temperature uniformity and single-shelf charging capacity and so forth at each step of the heat treatment-the formation of beneficial strength-toughness microstructures is synergistically promoted. This enables the acquisition of ultrahigh-strength and high-toughness steel with an excellent strength-toughness balance, stably achieving the technical indicators of room-temperature tensile strength ≥ 1930 MPa, room-temperature yield strength ≥ 1620 MPa, and fracture toughness ≥ 110 MPa·m¹/². Moreover, the coefficient of variation of the mechanical properties of the prepared ultrahigh-strength and high-toughness steel reach the ultra-high standards which coefficient of variation for tensile strength ≤ 0.18 and coefficient of variation for fracture toughness ≤ 2.0. As a result, the product exhibits qualified mechanical properties with small fluctuations and high stability, which can meet the production requirements and ensure more stable and reliable test specimen results.

### DETAILED DESCRIPTION OF THE INVENTION

To make the objectives, technical solutions, and advantages of the present disclosure clearer, the technical solutions in the embodiments of the present disclosure will be described clearly and completely below in conjunction with these embodiments of the present disclosure. It should be understood by those skilled in the art that the described embodiments are merely for facilitating the understanding of the present disclosure and shall not be construed as specific limitations thereon. Based on the embodiments of the present disclosure, all other embodiments obtained by those of ordinary skill in the art without making creative efforts shall fall within the protection scope of the present disclosure. For the process parameters not specified in the following embodiments, conventional conditions shall generally be adopted.

The endpoints and any values of the ranges disclosed in the present disclosure are not limited to such precise ranges or values; instead, these ranges or values should be construed as encompassing values that are close to such ranges or values. For numerical ranges, between the endpoint values of each range, between the endpoint values of each range and individual point values, as well as between individual point values, can be combined with one another to derive one or more new numerical ranges, and these new numerical ranges shall be deemed to be specifically disclosed in the present disclosure.

According to a first aspect of the present disclosure, a heat treatment method for an ultrahigh-strength and high-toughness steel is provided, comprising the following steps:

### Step(1) Quenching treatment:

Raising the temperature of a heating furnace with a temperature uniformity of ≤ ±14°C (e.g., ±13°C, ±12°C, ±11°C, ±10°C, ±9°C, ±8°C, ±7°C, ±6°C, ±5°C, ±4°C, ±3°C, ±2°C, ±1°C) to 885°C; after the temperature displayed on the temperature controller is stably maintained at 885°C, placing the mechanical property test specimens into the effective zone of the heating furnace with a tray for heating; starting timing once the temperature of the heating furnace being raised to 885°C within 5-10 minutes (e.g., 6 min, 7 min, 8 min, 9 min), followed by holding the temperature for 60-70 minutes (e.g., 62 min, 64 min, 66 min, 68 min); controlling the temperature of the cooling oil in the oil tank to ≤ 60°C (e.g., 40°C, 50°C, 52°C, 54°C, 56°C, 58°C) before quenching; turning on the stirring function of the oil tank; taking the mechanical property test specimens out of the heating furnace quickly, then dispersing them and immersing them into the oil tank for oil cooling;

### Step(2) Deep cryogenic treatment:

Lowering the temperature of a deep cryogenic cabinet with a temperature uniformity of ≤ ±8°C (e.g., ±7°C, ±6°C, ±5°C, ±4°C, ±3°C, ±2°C, ±1°C) to -73°C; after the temperature displayed on the temperature controller of the deep cryogenic cabinet is stably maintained at -73°C, placing the quenched mechanical property test specimens into the central effective zone of the deep cryogenic cabinet with a tray for deep cryogenic treatment; closing the cabinet door, then starting timing once the temperature displayed on the temperature controller returns to -73°C again, and holding the temperature for 60-70 minutes (e.g., 62 min, 64 min, 66 min, 68 min); cutting off the power supply, taking the test specimens out of the deep cryogenic cabinet, and allowing their temperature to return to room temperature in air;

### Step(3) Tempering treatment:

Raising the temperature of a tempering furnace with a temperature uniformity of ≤ ±3°C (e.g., ±2.5°C, ±2°C, ±1.5°C, ±1°C) to 482°C; after the temperature displayed on the temperature controller of the tempering furnace is stably maintained at 482°C, placing the deep cryogenically treated mechanical property test specimens into the effective zone of the tempering furnace for heating; starting timing once the temperature displayed on the temperature controller returns to 482°C again, and holding the temperature for 370-390 minutes (e.g., 372 min, 374 min, 376 min, 378 min, 380 min, 382 min, 384 min, 386 min, 388 min); taking the test specimens out of the tempering furnace and cooling them in air for 2 hours to room temperature, thereby obtaining the ultrahigh-strength and high-toughness steel.

Specifically, in step (1), the temperature uniformity of the heating furnace is preferably in the range of ±5°C to ±10°C, and excessively low temperature uniformity will narrow the controllable heat treatment temperature range of the material, resulting in harsh processing conditions and increased operational difficulty in actual quenching treatment. However, for the furnace body of the heating furnace for quenching provided by the present disclosure, maintaining the temperature uniformity at ±14°C can satisfy the process requirements.

Further, quenching at 885°C in step (1) yields the optimal mechanical properties of the material. This is because quenching below 885°C fails to effectively dissolve harmful carbides such as M6C and M23C6 in the material, making it impossible to achieve sufficient solution treatment. Conversely, quenching above 885°C will coarsen the grain size of the material, thereby reducing the comprehensive properties of the material.

In step (1), it is necessary to ensure that the temperature uniformity of the heating furnace, charging capacity and holding time act together within the limited ranges. Only in this way can the alloying elements in the steel be more uniformly dissolved in the steel, homogenize the microstructure of the steel, and thus obtain a more uniform microstructure during the subsequent cooling process.

Specifically, the main purpose of the deep cryogenic process in step (2) is to reduce the retained austenite in the material and eliminate the influence of the retained austenite on the properties during the subsequent tempering process. For the deep cryogenic cabinet provided by the present disclosure, a temperature uniformity of ±8°C can satisfy the requirement of eliminating retained austenite in the material during deep cryogenic treatment.

In step (2), it is necessary to ensure that the temperature uniformity of the deep cryogenic cabinet, charging capacity and holding time act together within the limited ranges. Only in this way can the retained austenite in the ultrahigh-strength and high-toughness steel be effectively reduced, thereby achieving a favorable matching of plasticity and toughness. After completion, the temperature of the test specimens needs to fully returned to room temperature in air .

Specifically, in step (3), the strengthening and toughening mechanism of the ultrahigh-strength and high-toughness steel provided by the present disclosure is mainly achieved by precipitating fine and dispersed M2C carbides and reversed austenite on the lath martensitic matrix with high dislocation density. The optimal matching of strength and toughness of the material can be achieved at 482°C. Tempering above 482°C will cause the precipitated M2C carbides to coarsen, which will gradually transform from the hexagonal close-packed (HCP) structure to the M2C carbides with the orthorhombic structure, thereby reducing the properties of the material. Tempering below 482°C cannot fully precipitate acicular M2C carbides to achieve strengthening. Therefore, the temperature uniformity of the tempering furnace is crucial, and a relatively high requirement is imposed on the temperature uniformity of the furnace for the material, which shall be within ±3°C. Furthermore, it is necessary to strictly control the tempering time within 370-390 minutes and the single-shelf charging capacity of the pit-type furnace to ≤ 8 tensile test specimens, plus 8 impact test specimens, further plus 8 fracture toughness test specimens, so as to ensure that both the strength and toughness of the material meet the requirements. A shorter tempering time will result in higher strength but lower toughness, while a longer tempering time will lead to lower strength but higher toughness.

As an optional embodiment of the present disclosure, in step (1), the heating furnace for quenching is a box-type furnace, and its single-shelf charging capacity is ≤ 4 tensile test specimens plus 4 impact test specimens and plus 4 fracture toughness test specimens.

As an optional embodiment of the present disclosure, in step (2), the single-shelf charging capacity of the deep cryogenic cabinet is ≤ 12 tensile test specimens plus 12 impact test specimens and plus 12 fracture toughness test specimens.

As an optional embodiment of the present disclosure, in step (3), the tempering furnace is a pit-type furnace, and its single-shelf charging capacity is ≤ 8 tensile test specimens plus 8 impact test specimens and plus 8 fracture toughness test specimens.

As an optional embodiment of the present disclosure, in step (1), the time for the rapid removal of the test specimens from the heating furnace and transferring them to the cooling oil for quenching is ≤ 6 s (e.g., 1s, 2s, 3s, 4s, 5s);
and/or, the cooling time of the test specimens in the cooling oil is 20-60 minutes (e.g., 30 min, 40 min, 50 min), with sufficient and uninterrupted stirring performed to promote the uniformity of the material during the quenching treatment.

Specifically, after the test specimens are taken out of the heating furnace, since the room temperature is lower than the austenitizing temperature of the steel, the microstructure in the test specimens starts to transform. If the transfer time exceeds 6s, due to the slow cooling rate on the surface of the test specimens, microstructural transformations such as bainite formation will occur in the steel, thereby affecting the subsequent properties of the material. Therefore, it is necessary to minimize the transfer time of the test specimens in air, so that the test specimens can be quickly transferred to the cooling oil for rapid cooling, avoiding the formation of undesirable microstructures such as bainite due to air cooling of the test specimens in air, which would otherwise impair the material properties.

Specifically, strict control of the cooling time can ensure the full and complete transformation of the austenitic microstructure into lath martensite, providing a prerequisite for achieving a favorable matching of strength and toughness. If the cooling time is less than 20 minutes, the lath martensite with high dislocation density formed after quenching cannot be fully transformed, which in turn affects the strength during the subsequent tempering process.

During the oil cooling of the mechanical property test specimens after quenching, it is necessary to ensure that the test specimens are completely submerged in the oil, and this is to enable the full transformation of austenite to martensite and improve the uniformity of the matrix microstructure.

As an optional embodiment of the present disclosure, the cooling oil is B244 vacuum quenching oil;
and/or, the oil cooling rate of the cooling oil is 60-90 °C/s (e.g., 65 °C/s, 70 °C/s, 75 °C/s, 80 °C/s, 85 °C/s).

Generally, 25# transformer oil and B244 vacuum quenching oil are selected as quenching media, and the B244 vacuum quenching oil is adopted in the present disclosure due to its extremely high cooling rate, which is particularly suitable for the quenching treatment of carbon steel and alloy steel. In addition, a lath martensitic matrix with high dislocation density can be obtained after quenching, which provides a prerequisite for achieving favorable matching of strength and toughness of the material.

As an optional embodiment of the present disclosure, the time interval between quenching treatment and deep cryogenic treatment does not exceed 1-2 hours (e.g., 1.2 h, 1.4 h, 1.6 h, 1.8 h);
and/or, the time interval between deep cryogenic treatment and tempering treatment is 2-8 hours (e.g., 3 h, 4 h, 5 h, 6 h, 7 h).

After the quenching treatment, the test specimens shall be transferred for deep cryogenic treatment within 1-2 hours, so as to ensure the sufficient transformation of austenite into lath martensite and achieve favorable matching of plasticity and toughness.

After deep cryogenic treatment, tempering treatment shall be carried out with an interval of at least 2 hours during the period from May to October generally, and with an interval of more than 3 hours during the period from November to April, so as to ensure that the temperature of test specimens fully return to room temperature after deep cryogenic treatment.

According to a second aspect of the present disclosure, a steel material prepared by the heat treatment method for an ultrahigh-strength and high-toughness steel as described above is provided.

As an optional embodiment of the present disclosure, the steel material is 3.1Cr-11.5Ni-13.5Co-1.2Mo steel, wherein the mass percentage of C is 0.21-0.25% (e.g., 0.22%, 0.23%, and 0.24%).

As an optional embodiment of the present disclosure, the coefficients of variation of the mechanical properties of the steel material include:
a coefficient of a variation of a tensile strength ≤ 0.18; a coefficient of a variation of a fracture toughness ≤ 2.0.

The present disclosure will be described in further detail below with reference to specific embodiments and comparative examples.

### Embodiment 1

### Step (1) Quenching treatment:

Raising the temperature of a heating furnace with a temperature uniformity of ≤ ±10°C to 885°C; after the temperature displayed on the temperature controller is stably maintained at 885 °C, placing the mechanical property test specimens (including standard tensile test specimens with a diameter of φ10 mm, impact test specimens of 10 mm×10 mm×55 mm, and fracture toughness test specimens with B=25 (compact or three-point bending specimens)) into the effective zone of the heating furnace with a tray for heating; starting timing when the furnace temperature rises to 885 °C within 10 minutes, and holding the temperature for 60 minutes; adopting B244 vacuum quenching oil with an oil cooling rate of 86 °C/s, controlling the temperature of the cooling oil at 30 °C before quenching; after holding the temperature, quickly placing the specimens into the cooling oil within 5 seconds, stirring the cooling oil and cooling the specimens in the cooling oil for 25 minutes until the temperature of test specimens return to room temperature.

### Step (2) Deep cryogenic treatment:

Performing deep cryogenic treatment 1 hour after the completion of quenching; lowering the temperature of a deep cryogenic cabinet with a temperature uniformity of ±1 °C to -73 °C; after the temperature displayed on the temperature controller of the deep cryogenic cabinet is stably maintained at -73 °C, placing the mechanical property test specimens into the central effective zone of the deep cryogenic cabinet with a tray for deep cryogenic treatment; starting the 60 minutes temperature holding for deep cryogenic treatment when the cabinet temperature returns to -73 °C again, 30 minutes after closing the cabinet door; cutting off the power supply, taking the test specimens out of the deep cryogenic cabinet, and allowing their temperature to return to room temperature in air.

### Step (3) Tempering treatment:

Raising the temperature of a pit-type tempering furnace with a temperature uniformity of ±3 °C to 482 °C; after the temperature displayed on the temperature controller is stably maintained at 482 °C, placing the mechanical property test specimens into the effective zone of the tempering furnace for heating 4 hours after the completion of deep cryogenic treatment ; starting timing when the temperature displayed on the controller returns to 482 °C again 20 minutes later, and holding the temperature for 370 minutes.

### Embodiment 2

### Step (1) Quenching treatment:

Raising the temperature of a heating furnace with a temperature uniformity of ≤ ±14°C to 885°C; after the temperature displayed on the temperature controller is stably maintained at 885 °C, placing the mechanical property test specimens (including standard tensile test specimens with a diameter of φ10 mm, impact test specimens of 10 mm×10 mm×55 mm, and fracture toughness test specimens with B=25 (compact or three-point bending specimens)) into the effective zone of the heating furnace with a tray for heating; starting timing when the furnace temperature rises to 885 °C within 7 minutes, and holding the temperature for 70 minutes; adopting B244 vacuum quenching oil with an oil cooling rate of 86 °C/s, controlling the temperature of the cooling oil at 60 °C before quenching; after holding the temperature, quickly placing the specimens into the cooling oil within 6 seconds, stirring the cooling oil and cooling the test specimens in the cooling oil for 60 minutes until the temperature of specimens return to room temperature.

### Step (2) Deep cryogenic treatment:

Performing deep cryogenic treatment 2 hour after the completion of quenching; lowering the temperature of a deep cryogenic cabinet with a temperature uniformity of ±8 °C to -73 °C; after the temperature displayed on the temperature controller of the deep cryogenic cabinet is stably maintained at -73 °C, placing the mechanical property test specimens into the central effective zone of the deep cryogenic cabinet with a tray for deep cryogenic treatment; and starting the 70 minutes temperature holding for deep cryogenic treatment when the cabinet temperature returns to -73 °C again, 30 minutes after closing the cabinet door; cutting off the power supply, taking the test specimens out of the deep cryogenic cabinet, and allowing their temperature to return to room temperature in air.

### Step (3) Tempering treatment:

Raising the temperature of a pit-type tempering furnace with a temperature uniformity of ±2 °C to 482 °C; after the temperature displayed on the temperature controller is stably maintained at 482 °C, placing the mechanical property test specimens into the effective zone of the tempering furnace for heating 4 hours after the completion of deep cryogenic treatment; starting timing when the temperature displayed on the controller returns to 482 °C again 20 minutes later, and holding the temperature for 390 minutes.

### Comparative Example 1

The operating steps of this comparative example are all the same as those of Embodiment 1, except that in step (1), the time for the rapid removal of the test specimens from the heating furnace and transferring them to the cooling oil for quenching is 8 s.

### Comparative Example 2

The operating steps of this comparative example are all the same as those of Embodiment 1, except that in step (1), the cooling time of the test specimens in the cooling oil is 10 minutes.

### Comparative Example 3

The operating steps of this comparative example are all the same as those of Embodiment 1, except that in step (1), 25# transformer oil is used as the cooling oil.

### Comparative Example 4

The operating steps of this comparative example are all the same as those of Embodiment 1, except that in Step (2), an alcohol deep cryogenic tank is adopted for deep cryogenic treatment, and its single-shelf charging capacity is ≤ 4 tensile test specimens plus 4 impact test specimens and plus 4 fracture toughness test specimens.

### Comparative Example 5

The operating steps of this comparative example are all the same as those of Embodiment 1, except that in Step (3), a box-type tempering furnace is adopted for tempering treatment, and its single-shelf charging capacity is ≤ 4 tensile test specimens plus 4 impact test specimens and plus 4 fracture toughness test specimens.

### Comparative Example 6

The operating steps of this comparative example are all the same as those of Embodiment 1, except that in Step (1), 25# transformer oil is used as the cooling oil; in Step (2), an alcohol deep cryogenic tank is adopted for deep cryogenic treatment; and in Step (3), a box-type tempering furnace is adopted for the tempering treatment.

### Comparative Example 7

The operating steps of this comparative example are all the same as those of Embodiment 1, except that in step (3), the tempering time is 350 minutes.

### Comparative Example 8

The operating steps of this comparative example are all the same as those of Embodiment 1, except that in step (3), the temperature uniformity of the furnace is ±4 °C.

For Embodiments 1-2 and Comparative Examples 1-8, the yield strength, tensile strength, percentage elongation after fracture, percentage reduction of area, and fracture toughness of the test specimens were measured in accordance with GB/T 228 and GB/T 4161 standards. Specifically, three test specimens of each type were tested for each embodiment and comparative example. The coefficients of variation (including *Cv* (tensile strength) and *Cv* (fracture toughness) values) of the mechanical properties of the test specimens obtained from each embodiment and comparative example were calculated statistically. The mechanical property data presented in Table 2 below are the average values of the three test specimens.

**Table 2 Mechanical property**

| Number of Test | yield strength | tensile strength | percentage elongation after fracture | percentage reduction of area | fracture toughness | Cv (tensile strength) | Cv (fracture toughness) |
|---|---|---|---|---|---|---|---|
| | MPa | MPa | % | % | MPa·m^{1/2} | % | % |
| Embodiment 1 | 1770 | 1955 | 14.5 | 63.7 | 124.5 | 0.18 | 1.96 |
| Embodiment 2 | 1778 | 1960 | 14.0 | 64.0 | 123.3 | 0.16 | 1.90 |
| Comparative Example 1 | 1751 | 1935 | 13.7 | 64.2 | 116.7 | 0.40 | 2.38 |
| Comparative Example 2 | 1755 | 1940 | 14.1 | 65.0 | 117.5 | 0.33 | 2.45 |
| Comparative Example 3 | 1734 | 1935 | 14.0 | 67.0 | 117.8 | 0.18 | 2.26 |
| Comparative Example 4 | 1735 | 1936 | 13.2 | 65.3 | 123.5 | 0.29 | 2.02 |
| Comparative Example 5 | 1712 | 1946 | 13.8 | 66.3 | 115.7 | 0.49 | 2.88 |
| Comparative Example 6 | 1732 | 1947 | 14.2 | 66.8 | 120.0 | 0.45 | 4.13 |
| Comparative Example 7 | 1791 | 1980 | 13.8 | 63.2 | 110 | 0.20 | 2.21 |
| Comparative Example 8 | 1780 | 1969 | 14.2 | 67.1 | 116 | 0.48 | 4.10 |

As can be seen from Table 2, compared with Embodiment 1, Comparative Example 1 involves a transferring time of 8s for the rapid removal of the test specimens from the heating furnace to their immersion into the cooling oil for quenching in Step (1). This prolonged transferring time causes the surface of the test specimens to contact with air, leading to the formation of microstructures such as bainite, and undesirable microstructures other than lath martensite are generated in the test specimens, which impairs the material properties and thus results in relatively large coefficients of variation for the tensile strength and fracture toughness of the test specimens.

As can be seen from Table 2, compared with Embodiment 1, Comparative Example 2 involves a cooling time of 10 minutes for the test specimens in the cooling oil in Step (1). This relatively short cooling time results in insufficient transformation of the lath martensite with high dislocation density formed after quenching, which in turn impairs the strength of the material during the subsequent tempering process, thus leading to relatively large coefficients of variation for the tensile strength and fracture toughness of the test specimens.

As can be seen from Table 2, compared with Embodiment 1, Comparative Example 3 uses 25# transformer oil as the cooling oil in Step (1), whose cooling rate is lower than that of B244 vacuum quenching oil. Therefore, under the same cooling time, the test specimens in Comparative Example 3 are not cooled sufficiently, which results in insufficient transformation of the austenitic microstructure into lath martensite in the test specimens. This impairs the material properties and thus leads to a relatively large coefficients of variation for the fracture toughness of the test specimens.

As can be seen from Table 2, compared with Embodiment 1, Comparative Example 4 adopts an alcohol deep cryogenic tank for deep cryogenic treatment in Step (2), whose single-shelf charging capacity is smaller than that of the deep cryogenic cabinet. This results in the failure to achieve the optimal synergistic effect among the single-shelf charging capacity, the temperature uniformity of the furnace and the holding time in Comparative Example 4, thus leading to relatively large coefficients of variation for the tensile strength and fracture toughness of the material.

As can be seen from Table 2, compared with Embodiment 1, Comparative Example 5 adopts a box-type tempering furnace for tempering treatment in Step (3), whose single-shelf charging capacity is smaller than that of the pit-type tempering furnace. This results in the failure to achieve the optimal synergistic effect among the single-shelf charging capacity, the temperature uniformity of the furnace and the holding time in Comparative Example 5, thus leading to relatively large coefficients of variation for the tensile strength and fracture toughness of the material.

As can be seen from Table 2, compared with Embodiment 1, in accordance with the above descriptions, the quenching medium, the deep cryogenic treatment equipment and the tempering treatment equipment adopted in Comparative Example 6 are all less effective than those in Example 1. This results in relatively large coefficients of variation for the tensile strength and fracture toughness of the material.

As can be seen from Table 2, compared with Embodiment 1, Comparative Example 7 involves a tempering time of 350 minutes in Step (3). This relatively short tempering time results in high strength but reduced toughness of the material, thus leading to relatively large coefficients of variation for the tensile strength and fracture toughness of the test specimens.

As can be seen from Table 2, compared with Embodiments 1-2, Comparative Example 8 features the temperature uniformity of the furnace of ±4 °C in Step (3). The relatively large furnace temperature uniformity prevents the sufficient precipitation of the acicular, fine and dispersed M2C carbides on the matrix of lath martensite with high dislocation density, which impairs the strengthening effect of the material and thus results in relatively large coefficients of variation for the tensile strength and fracture toughness of the test specimens.

In summary, the materials obtained in Embodiments 1-2 achieve the optimal balance between strength and toughness in terms of mechanical properties. Meanwhile, they exhibit the minimum coefficients of variation, the smallest fluctuations, and the highest stability for tensile strength and fracture toughness, which can fully meet the requirements for material production.

Finally, it should be noted that the above embodiments are only used to illustrate the technical solutions of the present disclosure but not to limit them. Although the present disclosure has been described in detail with reference to the foregoing embodiments, those of ordinary skill in the art should understand that they may still modify the technical solutions described in the foregoing embodiments, or equivalently replace some or all of the technical features therein. Such modifications or replacements do not cause the essence of the corresponding technical solutions to depart from the scope of the technical solutions of each embodiment of the present disclosure.

## Claims

1. A heat treatment method for an ultrahigh-strength and high-toughness steel, **characterized in that**, it comprises following steps:
Step (1) Quenching treatment:
Raising a temperature of a heating furnace with a temperature uniformity of ≤ ±14°C to 885°C; after the temperature displayed on a temperature controller is stably maintained at 885°C, placing mechanical property test specimens into an effective zone of the heating furnace with a tray for heating; starting timing when the temperature of the heating furnace rises to 885 °C within 5-10 minutes, and holding the temperature for 60-70 minutes; controlling the temperature of cooling oils in an oil tank to ≤60 °C before the quenching treatment; turning on the stirring function of the oil tank; taking the mechanical property test specimens out of the heating furnace quickly, then dispersing them and immersing them into the oil tank for oil cooling;
Step (2) Deep cryogenic treatment:
Lowering the temperature of a deep cryogenic cabinet with a temperature uniformity of ≤ ±8°C to -73°C; after the temperature displayed on a temperature controller of the deep cryogenic cabinet is stably maintained at -73°C, placing the mechanical property test specimens which have been quenched into a central effective zone of the deep cryogenic cabinet with a tray for the deep cryogenic treatment; closing a door of the deep cryogenic cabinet, then starting timing once the temperature displayed on the temperature controller returns to -73°C again; holding the temperature for 60-70 minutes; cutting off a power supply, taking the mechanical property test specimens out of the deep cryogenic cabinet, and allowing their temperature to return to room temperature in air;
Step (3) Tempering treatment:
Raising the temperature of a tempering furnace with the temperature uniformity of ≤ ±3°C to 482 °C; after the temperature displayed on a temperature controller of the tempering furnace is stably maintained at 482 °C, placing the mechanical property test specimens that have been subjected to the deep cryogenic treatment into an effective zone of the tempering furnace for heating, then starting timing once the temperature displayed on the temperature controller returns to 482°C again; holding the temperature for 370~390 minutes; taking the mechanical property test specimens out of the tempering furnace and cooling them in air for 2 hours to room temperature, thereby obtaining the ultrahigh-strength and high-toughness steel.

2. The heat treatment method for the ultrahigh-strength and high-toughness steel according to claim 1, **characterized in that**: in the step (1), the heating furnace for the quenching treatment is a box-type furnace, and its single-shelf charging capacity is ≤ 4 tensile test specimens plus 4 impact test specimens and plus 4 fracture toughness test specimens.

3. The heat treatment method for the ultrahigh-strength and high-toughness steel according to claim 1, **characterized in that**: in the step (2), the single-shelf charging capacity of the deep cryogenic cabinet is ≤ 12 tensile test specimens plus 12 impact test specimens and plus 12 fracture toughness test specimens.

4. The heat treatment method for the ultrahigh-strength and high-toughness steel according to claim 1, **characterized in that**: in the step (3), the tempering furnace is a pit-type furnace, and its single-shelf charging capacity is ≤ 8 tensile test specimens plus 8 impact test specimens and plus 8 fracture toughness test specimens.

5. The heat treatment method for the ultrahigh-strength and high-toughness steel according to claim 1, **characterized in that**: in the step (1), the time for a rapid removal of the mechanical property test specimens from the heating furnace and then transferring them to the cooling oil for quenching is ≤ 6s;
and/or, the cooling time of the mechanical property test specimens in the cooling oil is 20-60 minutes, with sufficient and uninterrupted stirring performed to promote the uniformity of the material during the quenching treatment.

6. The heat treatment method for the ultrahigh-strength and high-toughness steel according to claim 1, **characterized in that**: the cooling oil is B244 vacuum quenching oil;
and/or, the oil cooling rate of the cooling oil is 60-90 °C/s.

7. The heat treatment method for the ultrahigh-strength and high-toughness steel according to claim 1, **characterized in that**: a time interval between the quenching treatment and the deep cryogenic treatment does not exceed 1-2 hours;
and/or a time interval between the deep cryogenic treatment and the tempering treatment is 2-8 hours.

8. An ultrahigh-strength and high-toughness steel, **characterized in that**, it is produced by the heat treatment method according to claims 1-7.

9. The ultrahigh-strength and high-toughness steel according to claim 8, **characterized in that**: the ultrahigh-strength and high-toughness steel is 3.1Cr-11.5Ni-13.5Co-1.2Mo steel, wherein a mass percentage of C is 0.21~0.25%.

10. The ultrahigh-strength and high-toughness steel according to claim 8, **characterized in that**: coefficients of variation of mechanical properties of the ultrahigh-strength and high-toughness steel include:
a coefficient of a variation of a tensile strength ≤ 0.18; a coefficient of a variation of a fracture toughness ≤ 2.0.
